# EUROPEAN PATENT SPECIFICATION

(11) **EP 1 792 824 B1**
(45) Date of publication and mention of the grant of the patent: **27.08.2008**
(21) Application number: 06010555.8
(22) Date of filing: 22.05.2006
(51) Int. Cl.: B62M 25/04

(54) **Bicycle gear shifting operation device**
Schaltvorrichtung für ein Fahrrad
Dispositif de changement de vitesse pour bicyclette

(30) Priority: 30.11.2005 JP 2005346206
(43) Date of publication of application: 06.06.2007
(73) Proprietor: SHIMANO INC., Osaka 590-8577 (JP)
(72) Inventor: Kawakami, Tatsuya, Sakai City Osaka 590-8577 (JP)
(74) Representative: Hofmann, Harald

(56) References cited:
- EP-A1- 0 671 317
- EP-A1- 0 698 548
- EP-A1- 0 790 173
- EP-A2- 0 785 128
- EP-A2- 1 327 576
- EP-A2- 1 440 878
- US-A- 5 676 022
- US-A1- 2002 124 679

## Description

### [Technical Field]

The present invention relates to a gear shifting operation device, more particularly, to a bicycle gear shifting operation device mountable to a bicycle.

### [Background Art]

Many bicycles, in particular, sport bicycles include gear shifting devices. For operating a gear shifting device, a gear shifting operation device having an operating member in the form of a lever or a push button is provided on a frame of a bicycle such as a handle. The gear shifting operation device is connected to a gear shifting device via a gear shifting cable generally of a Bowden type, and the operating member is operated to pull or release the gear shifting cable to cause the gear shifting device to shift gears.

A bicycle gear shifting operation device according to the preamble of claim 1 is disclosed in EP 0698548.

In such a gear shifting operation device, a multistage releasable gear shifting operation device has been known capable of shifting gears collectively for a plurality of gear shifting stages in a cable releasing direction with one operation of an operating member (for example, see Patent Document 1). The conventional gear shifting operation device is mounted in a brake lever of a road racer having drop handles. The gear shifting operation device includes a rotation shaft mounted in the brake lever in a direction different from a brake operating direction, a cable locking unit rotatably mounted to the rotation shaft, a positioning unit integrally formed with the cable locking unit and having positioning teeth in an outer periphery thereof, a release wheel having release teeth in an outer periphery thereof, and a position holding and releasing mechanism having a positioning pawl that positions the positioning teeth and is moved in a releasing direction by the release teeth and a rotation preventing pawl that regulates a rotation of the positioning unit. The release wheel is rotatably mounted to the rotation shaft adjacent to the positioning unit.

With the gear shifting operation device, the release wheel is rotated according to continuous operations in one direction of a release lever as the operating member, thereby allowing the position holding and releasing mechanism having the positioning pawl and the rotation preventing pawl to be continuously operated. This allows multistage releasing for a plurality of gear shifting stages with one operation without the release lever being returned to an operation start position.

[Patent Document 1] Japanese Patent Laid-Open No. 2004-231176

### [Disclosure of the Invention]

### [Problems to be Solved by the Invention]

In the conventional configuration, the release wheel placed on the rotation shaft axially in line with the positioning unit allows releasing operations of the position holding and releasing mechanism to be continuously performed with one operation of the operating member. Thus, the gear shifting operation device has a long axial length for the release wheel. This increases the thickness of the gear shifting operation device, the length of the rotation shaft that supports members, and the size of a cover of the gear shifting operation device, which may increase the weight.

An object of the present invention is to provide a bicycle gear shifting operation device that allows multistage releasing without increasing the thickness of the device.

### [Means for Solving the Problems]

A bicycle gear shifting operation device according to the invention 1 comprises: a mounting portion, a shaft member, a cable locking unit, a position holding and releasing mechanism, and an operating member. The mounting portion is mountable to a bicycle. The shaft member is connected to the mounting portion and extends in a first axial direction. The cable locking unit is rotatably mounted around the first axis movably in a cable pulling direction and a cable releasing direction. The position holding and releasing mechanism includes a positioning unit integrally rotatable with the cable locking unit and having a plurality of positioning teeth in an outer periphery thereof, a positioning pawl that swings between a first engaging position for engagement with the positioning teeth and a first releasing position for release from the positioning teeth, and a rotation preventing pawl that is movable relative to the positioning pawl within a predetermined range, and placed in a second releasing position for separation from the positioning teeth when the positioning pawl is placed in the first engaging position, and in a second engaging position for engagement with the positioning teeth when the positioning pawl is placed in the first releasing position, and selectively holds the cable locking unit in any one of a plurality of holding positions. The operating member includes an input member mounted to the mounting portion movably at least in a first direction, and a driving member. The driving member has a plurality of operation portions that are placed in a line so as to be movably mounted to the mounting portion in positions spaced apart from the shaft member, engage the positioning pawl by one movement of the input member at least in the first direction to move the positioning pawl from the first engaging position to the first releasing position, and release the engagement with the positioning pawl by a movement of the rotation preventing pawl within the predetermined range so that the positioning pawl is movable to the first engaging position.

In the gear shifting operation device, when the input member is operated at least in the first direction, the driving member is moved in the position spaced apart from the shaft member along with the operation in the first direction, and the first operation portion of the driving member engages the positioning pawl to cause the positioning pawl to swing from the first engaging position to the first releasing position. This causes the rotation preventing pawl to be moved from the second releasing position to the second engaging position to rotate the positioning unit in the cable releasing direction until the positioning unit comes into contact with the second engaging position. Then, when the positioning teeth come into contact with the rotation preventing pawl, the rotation preventing pawl is moved within the predetermined range to release the engagement between the operation portion and the positioning pawl. This causes the positioning pawl to be moved to the first engaging position and come into contact with the positioning teeth, and the positioning unit is rotated in the cable releasing direction by one gear shifting stage and stopped instantaneously. When the next operation portion engages the positioning pawl, the positioning pawl is again moved to the first releasing position, further rotated in the cable releasing direction until the positioning unit comes into contact with the rotation preventing pawl. Then, the engagement of the operation portion is released, and the positioning pawl comes into contact with the positioning unit, and is further rotated in the cable releasing direction by one gear shifting stage and stopped instantaneously. When the further next operation portion engages the positioning pawl, the same operation is repeated. Thus, multistage releasing operations are performed the same number of times as the number of the operation portions at the maximum. The driving member for the multistage releasing operations is movably mounted to the mounting portion in the position spaced apart from the shaft member. Here, the plurality of operation portions placed in a line in the driving member placed in the position spaced apart from the shaft member engage the positioning pawl to cause the positioning pawl to swing to the first releasing position, the movement of the rotation preventing pawl within the predetermined range releases the engagement between the driving member and the positioning pawl to cause the positioning pawl to swing to the first engaging position, and thus no structure for the multistage releasing is placed on the shaft member on which the positioning unit and the cable locking unit are placed. This prevents the increase in the axial length of the shaft member, and allows the multistage releasing without increasing the thickness of the device.

For the bicycle gear shifting operation device according to the invention 2, in the device according to the invention 1, each of the plurality of operation portions includes an engaging portion that engages the positioning pawl, and an engagement releasing portion that releases the engagement with the positioning pawl at the engaging portion by the movement of the rotation preventing pawl within the predetermined range. In this case, the portion that engages the positioning pawl and the portion that release the engagement with the positioning pawl are separately provided in the release portion, thereby facilitating the engagement and the release of the engagement.

For the bicycle gear shifting operation device according to the invention 3, in the device according to the invention 1 or 2, the rotation preventing pawl is rotated relative to the positioning pawl within the predetermined range by the positioning teeth when the rotation preventing pawl is placed in the second engaging position. In this case, the rotation preventing pawl can be rotated within the predetermined range to release the engagement between the operation portion and the positioning pawl by the positioning teeth of the positioning unit, thereby simplifying a structure of the position holding and releasing mechanism.

For the bicycle gear shifting operation device according to the invention 4, in the device according to the invention 3, the rotation preventing pawl includes a release cam portion that comes into contact with the engagement releasing portion of the operation portion during the rotation within the predetermined range to move the driving member to a position spaced apart from the positioning pawl. In this case, the release cam is provided to allow the rotation preventing pawl to efficiently come into contact with the engagement releasing portion.

For the bicycle gear shifting operation device according to the invention 5, in the device according to any of the inventions 1 to 4, the rotation preventing pawl and the positioning pawl are mounted to the mounting portion swingably around a second axis parallel to the first axis. In this case, the rotation preventing pawl and the positioning pawl are rotated around the same second axis parallel to the first axis that is a rotation axis of the positioning unit, thereby simplifying the structure.

For the bicycle gear shifting operation device according to the invention 6, in the device according to any of the inventions 1 to 5, the driving member includes a first member that is mounted, at a base thereof, to the mounting portion swingably around a third axis parallel to the first axis, and swings by the movement of the input member at least in the first direction, and a second member that has the engaging portion at a tip thereof, and is mounted to a tip of the first member swingably around a fourth axis parallel to the first axis. In this case, the first member is placed between the input member and the operation portion to provide two swing axes, thereby allowing the operation portion to be easily moved along the positioning pawl relative to the movement of the input member in the first direction, and allowing the operation portion to easily approach and be separated from the positioning pawl to cause the engagement and the release of the engagement between the positioning pawl and the operation portion.

The bicycle gear shifting operation device according to the invention 7, in the device according to any of the inventions 1 to 6, further comprises a first urging member that urges the driving member in a direction of the operation portion engaging the positioning teeth. In this case, the first urging member urges the operation portion in the engaging direction, thereby allowing the driving member to reliably engage the positioning pawl.

The bicycle gear shifting operation device according to the invention 8, in the device according to any of the inventions 1 to 7, further comprises a second urging member that urges the positioning pawl toward the first engaging position. In this case, the positioning pawl is urged toward the first engaging position, and thus when the engagement with the driving member is released, the positioning pawl is reliably moved to the first engaging position.

### [Advantages of the Invention]

According to the present invention, the plurality of operation portions placed in a line in the driving member in the position spaced apart from the shaft member engage the positioning pawl to cause the positioning pawl to swing to the first releasing position, the movement of the rotation preventing pawl within the predetermined range releases the engagement between the driving member and the positioning pawl to cause the positioning pawl to swing to the first engaging position, and thus no structure for the multistage releasing is placed on the shaft member on which the positioning unit and the cable locking unit are placed. This prevents the increase in the axial length of the shaft member, and allows the multistage releasing without increasing the thickness of the device.

### [Best Mode for Carrying Out the Invention]

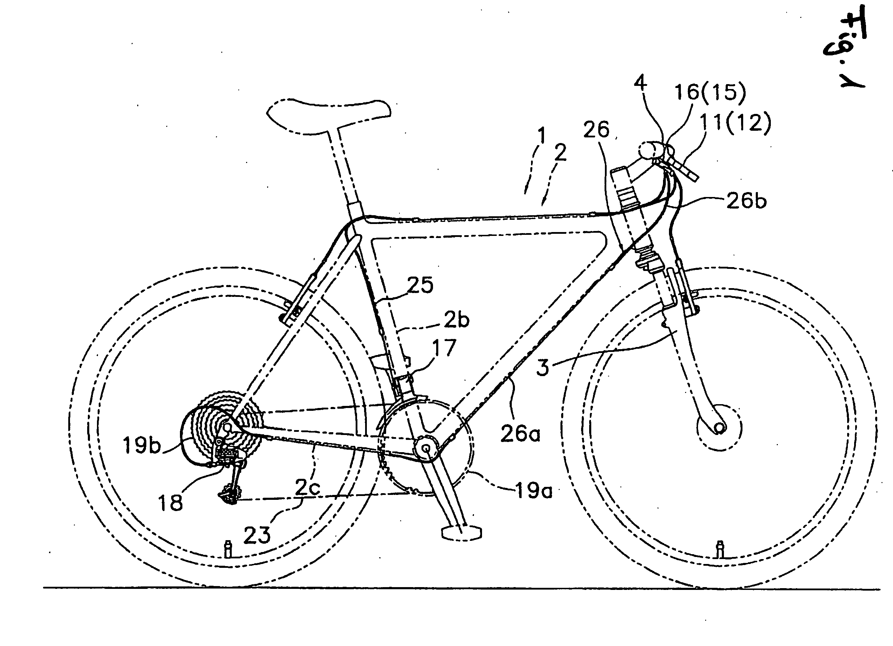

In Figure 1, a bicycle 1 including an embodiment of the present invention includes a frame 2 having a suspension fork 3 and a handlebar 4 secured to an upper portion of the suspension fork 3. A front derailleur 17 that constitutes an exterior gear shifting device is mounted to the middle of the frame 2, and a rear derailleur 18 is mounted to a rear end of the frame 2. The front derailleur 17 is placed, for example, in a lower portion of a seat tube 2b of the frame 2, and guides a chain 23 to any of sprockets of a front gear 19a having, for example, three sprockets. The rear derailleur 18 is placed in a rear end of a chain stay 2c of the frame 2, and guides the chain 23 to any of sprockets of a rear gear 19b having, for example, nine sprockets. The front derailleur 17 and the rear derailleur 18 are connected to front and rear gear shifting operation portions (an example of a gear shifting operation device) 15 and 16 via front and rear gear shifting cables 25 and 26.

The front and rear gear shifting operation portions 15 and 16 are placed inside and near brake levers 12 and 11 in the handlebar 4. The front gear shifting operation portion 15 and the rear gear shifting operation portion 16 are related as object and mirror image, and configurations and operations thereof are substantially the same except the number of gear shifting stages. Thus, the rear gear shifting operation portion 16 will be described below for the description of the configuration and the operation.

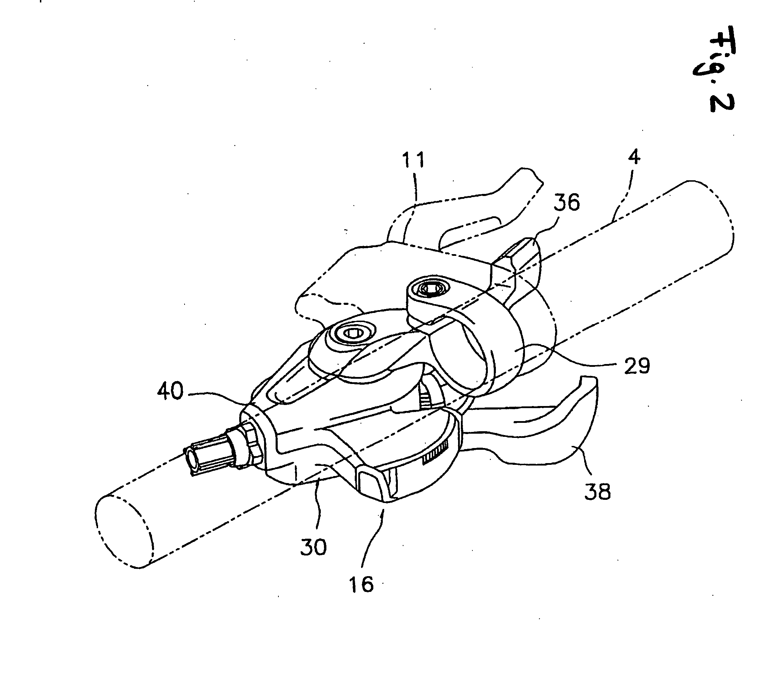

As shown in FIG. 2, the rear gear shifting operation portion 16 includes a mounting portion 30 mountable to the handlebar 4 inside the front brake lever 11. The mounting portion 30 may be integrally secured to a bracket of the front brake lever 11. The mounting portion 30 is secured to the handlebar 4 by a band 29.

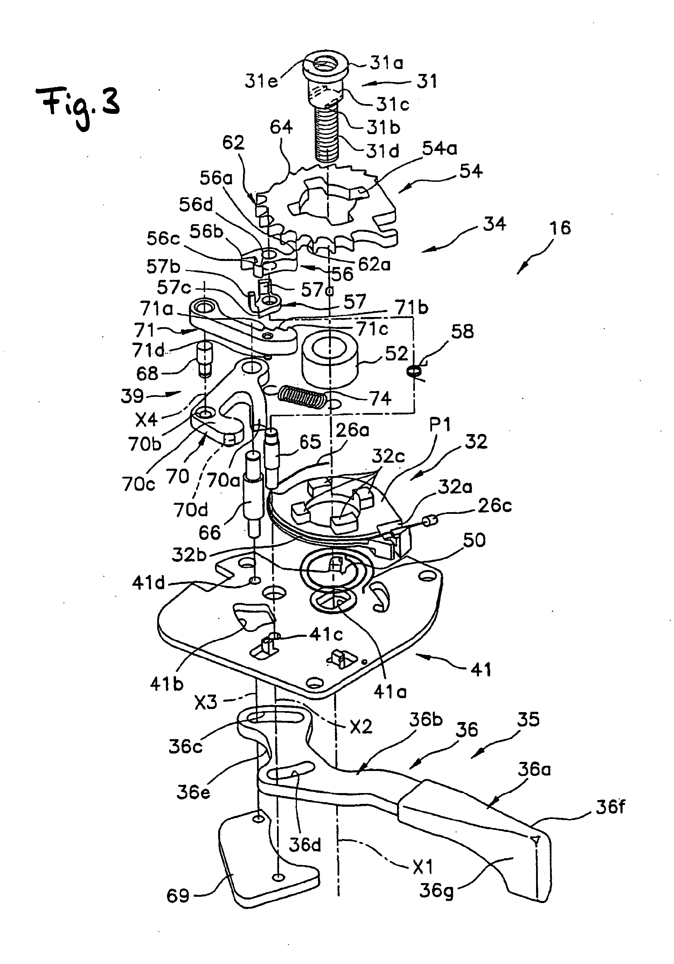

As shown in Figure 3, the rear gear shifting operation portion 16 includes a support shaft 31 connected to the mounting portion 30 and extending in a direction of a first axis X1, a winding unit (an example of a cable locking unit) 32 mounted rotatably around the first axis X1 movably in a cable pulling direction and a cable releasing direction of the gear shifting cable 26, a position holding and releasing mechanism 34 that selectively holds the winding unit 32 in any one of a plurality of holding positions corresponding to a plurality of gear shifting positions, a release lever 35 (an example of an operating member) for an operation in the cable releasing direction, and a winding lever 38 shown in Figure 2 for an operation in the cable pulling direction. The release lever 35 includes a lever member (an example of an input member) 36 for a cable releasing operation, and a driving mechanism (an example of a driving member) 39 for causing the position holding and releasing mechanism 34 to perform a releasing operation for a plurality of gear shifting stages with one operation of the lever member 36. In Figure 3, main portions of the rear gear shifting operation portion 16 according to the present invention are shown in an inverted position from that shown in Figure 2.

As shown in Figures 2 to 5, the mounting portion 30 mainly includes a casing 40 (Figure 2), for example, of synthetic resin mountable to the handlebar 4 and having a space therein, and a mounting bracket 41 (Figure 3 and Figure 4) provided in the space in the casing 40. The mounting bracket 41 is a metal plate member, and the support shaft 31 is nonrotatably connected to the mounting bracket 41. The position holding and releasing mechanism 34, the release lever 35, the winding lever 38, and the driving mechanism 39 are also movably connected to the mounting bracket 41. Configurations thereof and detailed connecting structures to the mounting bracket 41 will be described together with descriptions of each component.

The support shaft 31 is placed in the direction of the first axis X1 that passes through a slot-shaped opening 41 a of the mounting bracket 41 in Figure 3. A circular head 31a is formed in a base of the support shaft 31 (an upper end in Figure 3), and a rotation support portion 31c having chamfered portions 31 b parallel to each other at a lower end is formed in the middle thereof. A male screw 31d is formed in a lower portion, and a female screw 31e is formed in the head 31 a. An unshown bolt is screwed into the female screw through the casing 40 to secure the support shaft 31 to the mounting portion 30. The support shaft 31 is nonrotatably connected to the mounting bracket 41 with the chamfered portions 31 b engaging the opening 41 a.

The winding unit 32 is, for example, a member of synthetic resin such as polyacetal, placed on a first surface (an upper surface in Figure 3) of the mounting bracket 41, and mounted to the rotation support portion 31 c of the support shaft 31 via a bush 52 movably (rotatably) in a cable winding direction and the cable releasing direction. The winding unit 32 includes, in an outer peripheral surface thereof, an inner locking portion 32a that locks a cable nipple 26c secured to a tip of an inner cable 26a of the rear gear shifting cable 26, and a cable winding groove 32b for winding the inner cable 26a. The winding unit 32 is urged in the cable releasing direction (clockwise in Figure 3) by a spring member 50, for example, in the form of a spiral spring. The spring member 50 has one end locked to the winding unit 32 and the other end locked to the mounting bracket 41. In an upper surface of the winding unit 32, for example, four engaging protrusions 32c are formed that are interlocked with and rotate a positioning unit 54 described later of the position holding and releasing mechanism 34. One of the four engaging protrusions 32c has a circumferential length different from that of the others. This allows rotation phases of the positioning unit 54 and the winding unit 32 to be reliably matched.

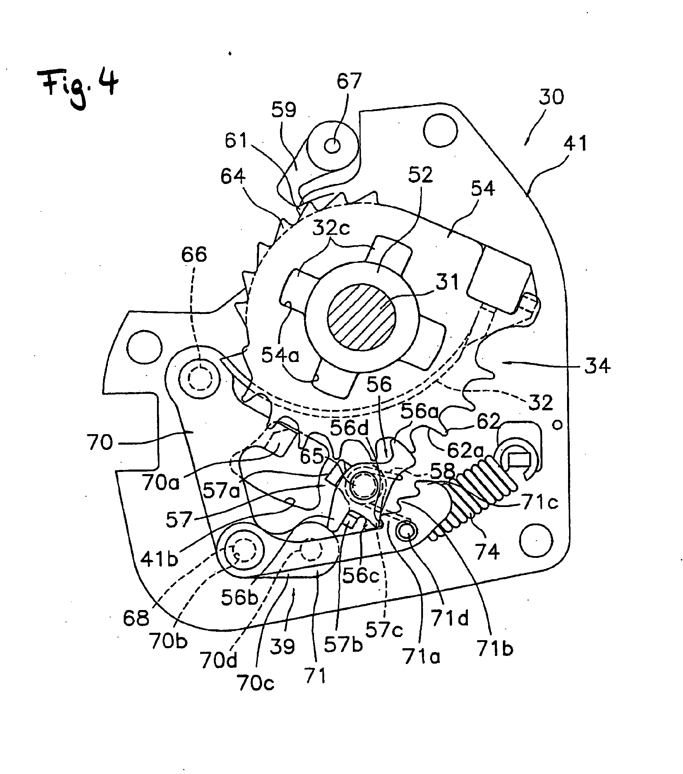

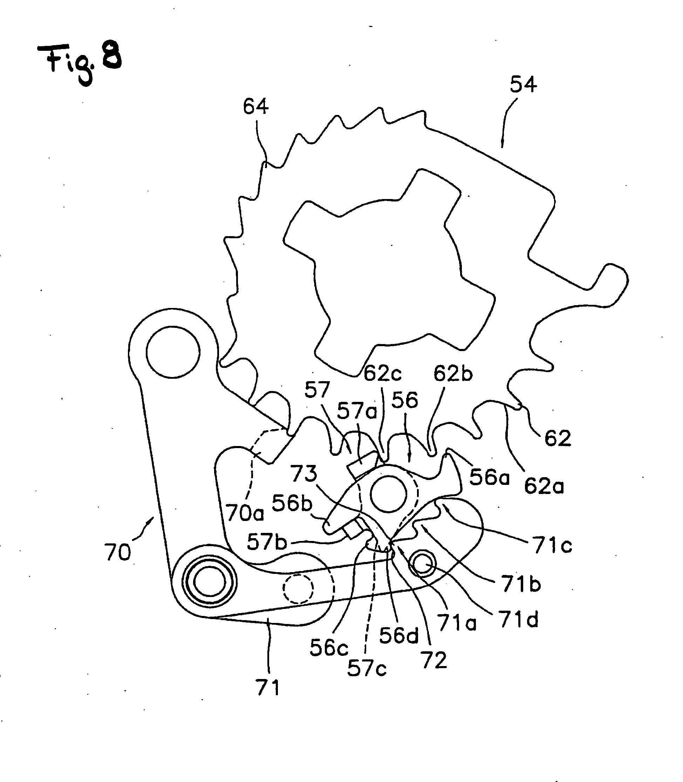

The position holding and releasing mechanism 34 is placed on the side of the first surface of the mounting bracket 41. The position holding and releasing mechanism 34 includes a positioning unit 54 that has, for example, nine positioning teeth 62 and eight advance teeth 64 and is interlocked with the winding unit 32, and a positioning pawl 56 that swings between a first engaging position for engagement with the positioning teeth 62 shown in Figure 4 and a first releasing position for release from the positioning teeth 62 shown in Figure 8. The position holding and releasing mechanism 34 includes a rotation preventing pawl 57 that swings between a second engaging position for engagement with the positioning teeth 62 in a position different from the positioning pawl 56 shown in Figure 8 and a second releasing position for release from the positioning teeth 62 shown in Figure 4, and an advance pawl 59 that engages and is separated from the advance teeth 64.

The positioning unit 54 is placed in contact with the upper surface of the winding unit 32 in Figure 3. The positioning unit 54 has an engaging hole 54a that engages the engaging protrusion 32c of the winding unit 32, and is integrally rotated with the winding unit 32. The positioning teeth 62 and the advance teeth 64 are provided of the numbers corresponding to the number of gear shifting positions of the rear derailleur 18, and formed in an outer peripheral surface of the positioning unit 54 so as to radially protrude. The positioning unit 54 is urged in the cable releasing direction (clockwise in Figure 3) together with the winding unit 32 by the spring member 50. The positioning teeth 62 and the advance teeth 64 are spaced based on the amount of movement of the cable set according to the gear shifting positions of the rear derailleur 18.

The positioning pawl 56 is swingably mounted to a second swing shaft 65 provided to pass through the mounting bracket 41 and placed along a second axis X2 parallel to the first axis X1. The second swing shaft 65 passes through the mounting bracket 41 and extends downward. The positioning pawl 56 is urged counterclockwise in Figure 3 so as to be placed in the first engaging position by a spring member (an example of a second urging member) 58, for example, in the form of a torsion coil spring. The positioning pawl 56 includes a first pawl portion 56a that comes into contact with a locking surface 62a of the positioning teeth 62 and prevents the positioning unit 54 urged clockwise from being rotated in the cable releasing direction, a pair of regulating protrusions 56b and 56c for regulating a swing range of the rotation preventing pawl 57, and an engaging protrusion 56d that engages the driving mechanism 39. The first pawl portion 56a is formed to protrude toward the positioning unit 54 in a tip extending from the center of rotation along the positioning unit 54. The pair of regulating protrusions 56b and 56c extend on the opposite side of the first pawl portion 56a with a space therebetween. The regulating protrusion 56b is formed in a position such that the rotation preventing pawl 57 is placed in the second releasing position when the positioning pawl 56 is placed in the first engaging position. The regulating protrusion 56c is provided so that the rotation preventing pawl 57 can release the engagement between a second arm member (an example of a second member) 71 of the driving mechanism 39 described later by the swing within the predetermined range and the positioning pawl 56. The engaging protrusion 56d slightly protrudes toward the second arm member 71 so as to be engageable with three operation portions 71a to 71c of the second arm member 71.

The rotation preventing pawl 57 is rotatably mounted to the second swing shaft 65 below the positioning pawl 56, and swingable within a predetermined range (for example, within a range of 5 to 10 degrees) relative to the positioning pawl 56. In order to achieve this, the rotation preventing pawl 57 has a second pawl portion 57a that is bent upward from below the positioning pawl 56 in Figure 3 and engages the positioning teeth 62, a regulating portion 57b bent upward so as to be placed between the pair of regulating protrusions 56b and 56c, and a release cam portion 57c that can abut against the three operation portions 71a to 71c of the second arm member 71. The regulating portion 57b is formed to come into contact with the regulating protrusion 56b when the positioning pawl 56 is moved from the first releasing position in Figure 8 to the first engaging position in Figure 4 to allow the rotation preventing pawl 57 to be moved from the second engaging position to the second releasing position. The release cam portion 57c is formed to be moved from the second releasing position to the second engaging position together with the positioning pawl 56 when the positioning pawl 56 is moved from the first engaging position to the first releasing position by the driving mechanism 39. The release cam portion 57c is provided, when in the second engaging position, to release the engagement between the positioning pawl 56 and the driving mechanism 39 when the positioning teeth 62 come into contact with the second pawl portion 57a to cause the rotation preventing pawl 57 to be rotated within the predetermined range. As shown in Figure 8, the release cam portion 57c overlaps the regulating protrusion 56c and is hidden when the regulating portion 57b comes into contact with the regulating protrusion 56b.

As shown in Figure 8, when moved to the second engaging position, the rotation preventing pawl 57 comes into contact with a positioning tooth 62c upstream in the cable releasing direction by one of a positioning tooth 62b with which the positioning pawl 56 has been in contact, and prevents the positioning unit 54 from being continuously rotated in the cable releasing direction at a stroke after the positioning pawl 56 is disengaged. When the rotation preventing pawl 57 is placed in the second engaging position, the positioning pawl 56 is placed in a position passing over the positioning tooth 62b that the positioning pawl 56 has engaged as shown in Figure 4.

The advance pawl 59 is swingably mounted to a swing shaft 67 standing on the winding lever 38. The advance pawl 59 is urged counterclockwise in Figure 4 by a spring member (not shown) such as a torsion coil spring so that the advance pawl 59 is placed in an advance position. The advance pawl 59 is placed in a position spaced apart from the advance teeth 64 by a holding plate 61 provided in the mounting bracket 41 when the winding lever 38 is placed in an operation start position. Then, when the winding lever 38 is operated, the advance pawl 59 engages the advance teeth 64 from an end of the holding plate to rotate the positioning unit 54 in the cable pulling direction (counterclockwise in Figure 4).

The release lever 35 includes the lever member (an example of an input member) 36 for the cable releasing operation, and the driving mechanism (an example of a driving member) 39 for causing the position holding and releasing mechanism 34 to perform the releasing operation for the plurality of gear shifting stages with one operation of the lever member 36.

The lever member 36 is placed in a second surface (a lower surface in Figure 3) of the mounting bracket 41. The lever member 36 can cause the position holding and releasing mechanism 34 to perform the releasing operation via the driving mechanism 39 according to any of operations in a first direction, clockwise and a second direction, counterclockwise in Figure 3.

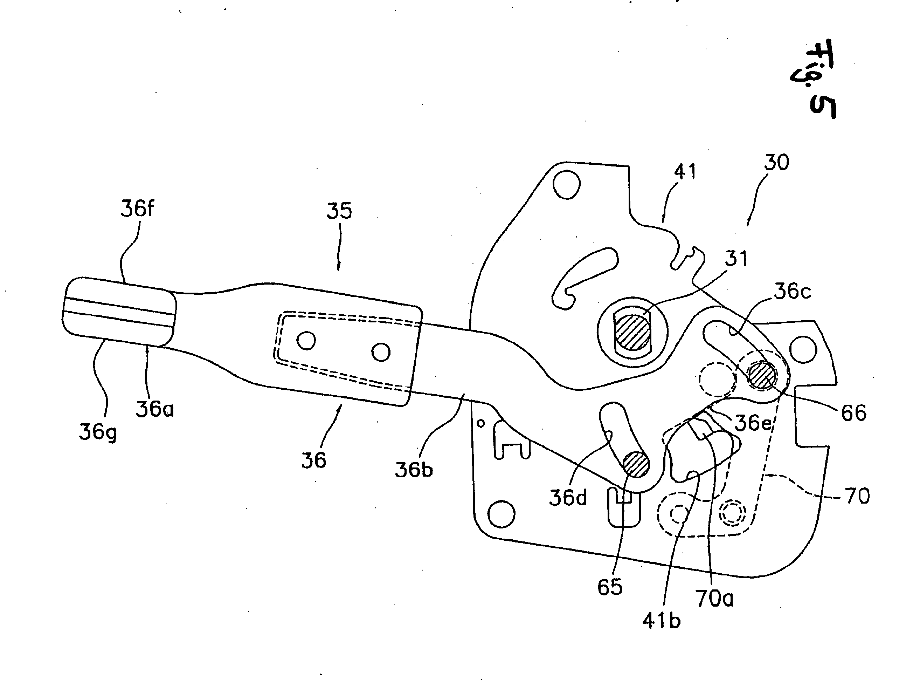

The lever member 36 swings from a neutral position in Figure 5 in the second direction (clockwise in Figure 5) around the second swing shaft 65 protruding on the side of the second surface of the mounting bracket 41. The lever member 36 also swings in the first direction (counterclockwise in Figure 5) around the first swing shaft 66 that is spaced apart from the second swing shaft 65 and on which a first arm member (an example of a first member) 70 of the driving mechanism 39 is swingably supported. The first swing shaft 66 is placed along a third axis X3 parallel to the first axis X1. The lever member 36 is urged toward the support shaft 31 via the driving mechanism 39. The lever member 36 is urged so that the first and second swing shafts 66 and 65 are placed in one ends (lower ends in Figure 5) of first and second slots 36c and 36d described later. In this embodiment, the lever member 36 is urged toward the support shaft 31.

The lever member 36 has an operation knob 36a, and a lever portion 36b connected to the knob 36a. The knob 36a is made of, for example, synthetic resin or die cast metal, and has, on opposite sides thereof, first and second operation surfaces 36f and 36g for operations in the first and second directions so as to facilitate the operations in the first and second directions. The lever portion 36b is made of, for example, metal such as a stainless steel alloys or steel, and slightly bent in the middle so as to be placed around the support shaft 31.

The first and second slots 36c and 36d having arcuate shapes and semicircular opposite ends are formed in a base and a tip side thereof of the lever portion 36b. The first slot 36c is formed by an arc around a semicircle at one end (a lower end in Figure 5) of the second slot 36d, and the second slot 36d is formed by an arc around a semicircle at one end (a lower end in Figure 5) of the first slot 36c. Between the first and second slots 36c and 36d, an acting portion 36e for operating the driving mechanism 39 is formed in one edge (a lower side in Figure 5) of the lever portion 36b. The acting portion 36e is always in contact with the first arm member 70 of the driving mechanism 39 that urges the lever member 36 toward the support shaft 31. The first slot 36c engages the first swing shaft 66, and the second slot 36d engages the second swing shaft 65. Thus, widths of the slots 36c and 36d are slightly larger than diameters of the swing shafts 66 and 65. The swing shafts 65 and 66 pass through through holes 41c and 41d formed in the mounting bracket 41 and extend downward, and have lower ends secured by a support plate 69 spaced apart from the second surface of the mounting portion bracket 41.

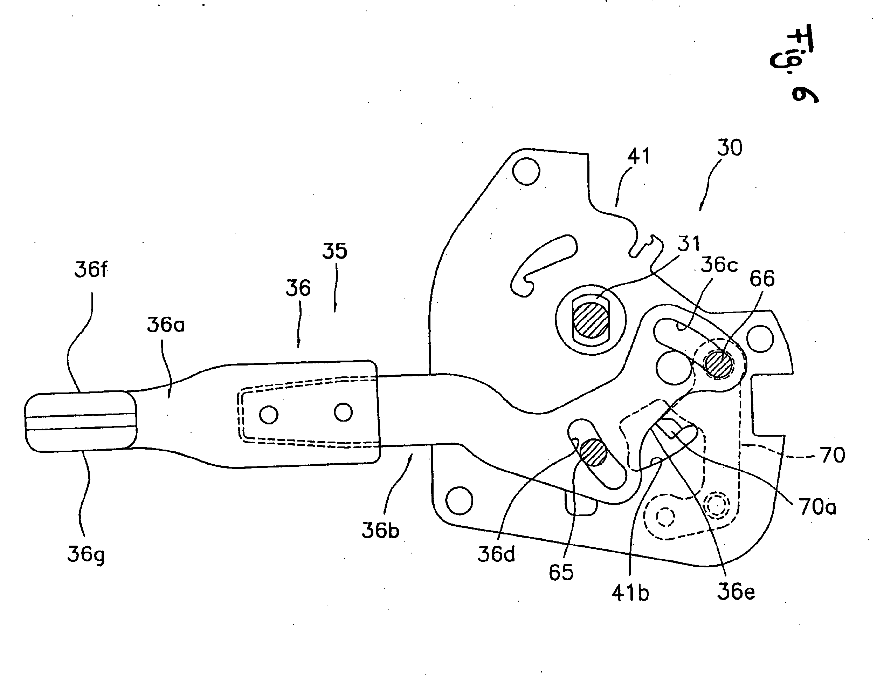

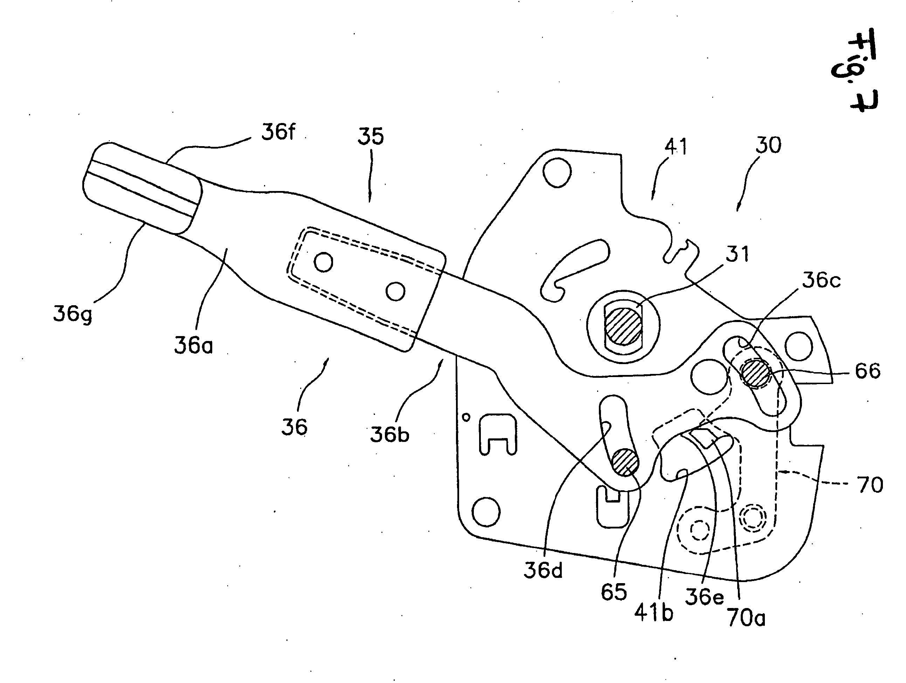

As shown in Figure 5, the lever member 36 urged toward the support shaft 31 swings from the neutral position in which one ends (the lower ends in Figure 5) of the slots 36c and 36d come into contact with the swing shafts 66 and 65 in any of the first direction in Figure 6 and the second direction in Figure 7. At this time, when the lever member 36 is moved in the first direction, the first swing shaft 66 is the center of swing, and when the lever member 36 is moved in the second direction, the second swing shaft 65 is the center of swing as described above. In any of the movements, the acting portion 36e operates in the same manner, and causes the driving mechanism 39 to perform the same operation. Thus, the lever member 36 can perform the same multistage releasing operation by the operations from the neutral position in both the first and second directions.

Though not shown in Figure 3, the winding lever 38 is placed above the positioning unit 54 in Figure 3, and swingably mounted to the support shaft 31 from the operation start position in an operation finish direction. As described above, the advance pawl 59 is swingably placed in the middle of the winding lever 38. The winding lever 38 is urged toward the operation start position by an unshown spring member.

As shown in Figure 3 and Figure 4, the driving mechanism 39 is movably connected to the first surface of the mounting bracket 41 in the position spaced apart from the support shaft 31. Specifically, the driving mechanism 39, that is, the driving member includes the first arm member 70 swingably mounted to the first swing shaft 66, and the second arm member 71 swingably mounted to the first arm member 70. The first arm member 70 includes a locking portion 70a that branches on the way to the second arm member 71, a connecting portion 70b that swingably connects the second arm member 71, and a support portion 70c for preventing rattling during the swing of the first and second arm members 70 and 71. The locking portion 70a branches on the way, passes through the opening 41b formed in the mounting bracket 41, and extends on the side of the second surface. The acting portion 36e of the lever member 36 comes into contact with a tip of the locking portion 70a. The first arm member 70 is interlocked with the acting portion 36e moved by the operation of the lever member 36 and swings. The first arm member 70 is urged counterclockwise in Figure 4 by a spring member 74 locked to the second arm member 71. The urging force is transmitted to the lever member 36 via the acting portion 36e to urge the lever member 36 toward the support shaft 31. A third swing shaft 68 stands on the connecting portion 70b. The support portion 70c extends to overlap a swing range of the second arm member 71, and comes into contact with the second arm member 71 to prevent rattling of the second arm member 71. A contact protrusion 70d that comes into contact with the first surface of the mounting bracket 41 is formed in a lower surface of the support portion 70c. This also reduces rattling of the first arm member 70 during the swing.

The second arm member 71 has the plurality of (for example, three) operation portions 71a to 71c at a tip thereof. The three operation portions 71a to 71c allow the driving mechanism 39 to perform three multistage releasing operations at the maximum with one operation of the lever member 36 in the first direction or the second direction, that is, continuous gear shifting for three gear shifting stages. For example, the movement of the inner cable 26a in the cable releasing direction causes the rear derailleur 18 to perform shifting up, and when the current gear shifting stage is the ninth stage, the gear can be shifted to the sixth stage at a stroke.

As shown in Figure 8, each of the operation portions 71a to 71c includes an engaging portion 72 that engages the engaging protrusion 56d of the positioning pawl 56, and an engagement releasing portion 73 that comes into contact with the release cam portion 57c by the swing of the rotation preventing pawl 57 within the predetermined range and releases the engagement with the positioning pawl 56 at the engaging portion 72. The engagement releasing portion 73 is provided axially adjacent to the engaging portion 72. The second arm member 71 is urged in a direction approaching the positioning pawl 56 by a spring member (an example of a first urging member) 74, for example, in the form of a coil spring. As described above, the first arm member 70 is also urged in a direction approaching the positioning unit 54 by the spring member 74, and further, the lever member 36 is urged in a direction approaching the support shaft 31. The spring member 74 is locked to a locking pin 7 1 d having one end protruding toward the mounting bracket 41 near the operation portion 71a of the second arm member 71 and the other end locked to the mounting bracket 41. Thus, the spring member 74 collectively urges the three members 71, 70, and 36.

The front gear shifting operation portion 15 and the rear gear shifting operation portion 16 are related as object and mirror image and have substantially the same structure except the number of gear shifting stages, and the front gear shifting operation portion 15 is provided inside the rear brake lever 12.

Next, a gear shifting operation of the rear gear shifting operation portion 16 will be described.

An operation in the cable releasing direction is as described below.

When the lever member 36 is operated in the first direction from the neutral position in Figure 5, the lever member 36 swings around the first swing shaft 66 as shown in Figure 6. When the lever member 36 swings around the first swing shaft 66, the swing causes the acting portion 36e to be moved in a direction apart from the support shaft 31 against an urging force of the spring member 74, and causes the first arm member 70 that comes into contact with the acting portion 36e to swing in a direction apart from the positioning unit 54.

When the lever member 36 is operated in the second direction from the neutral position in Figure 5, the lever member 36 swings around the second swing shaft 65 as shown in Figure 7. When the lever member 36 swings around the second swing shaft 65, the swing causes the acting portion 36e to be moved in the direction apart from the support shaft 31 against the urging force of the spring member 74 like the operation in the first direction, and the first arm member 70 that comes into contact with the acting portion 36e swings in the direction apart from the positioning unit 54.

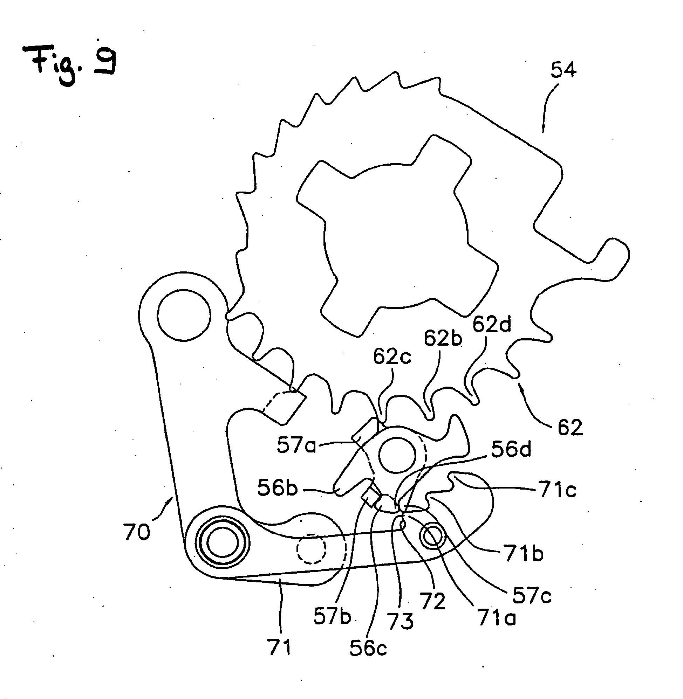

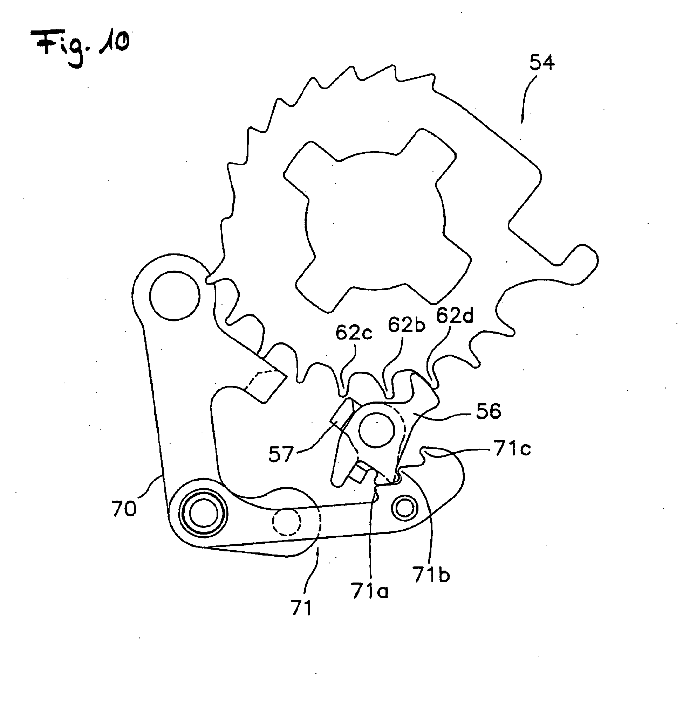

When the first arm member 70 swings in the direction apart from the positioning unit 54, the engaging portion 72 of the operation portion 71a of the second arm member 71 engages the engaging protrusion 56d of the positioning pawl 56 to cause the positioning pawl 56 to swing clockwise around the second swing shaft 65 from the first engaging position in Figure 4 to the first releasing position in Figure 8. At this time, the operation portion 71a also comes into contact with the release cam portion 57c of the rotation preventing pawl 57 to cause the rotation preventing pawl 57 to swing from the second releasing position in Figure 4 to the second engaging position in Figure 8. Thus, the positioning unit 54 urged in the cable releasing direction clockwise in Figure 8 by the spring member 50 via the winding unit 32 is rotated in the cable releasing direction, and the positioning tooth 62c downstream in the rotational direction by one of the positioning tooth 62b positioned by the positioning pawl 56 comes into contact with the second pawl portion 57a of the rotation preventing pawl 57. Then, the rotation preventing pawl 57 is swingable relative to the positioning pawl 56 within the predetermined range, and thus the rotation preventing pawl 57 pressed by the positioning tooth 62c swings counterclockwise. Then, as shown in Figure 9, the release cam portion 57c of the rotation preventing pawl 57 presses the engagement releasing portion 73 of the operation portion 71a to release the engagement with the positioning pawl 56 at the engaging portion 72 in the second arm member 71. Thus, the positioning pawl 56 urged by the spring member 58 is moved from the first releasing position to the first engaging position, and engages the positioning tooth 62d on the cable releasing side by one stage to finish the release operation for one gear shifting stage. This state is shown in Figure 10. In Figure 10, the positioning unit 54 is rotated in the cable releasing direction by one gear shifting stage as compared with that in Figure 4.

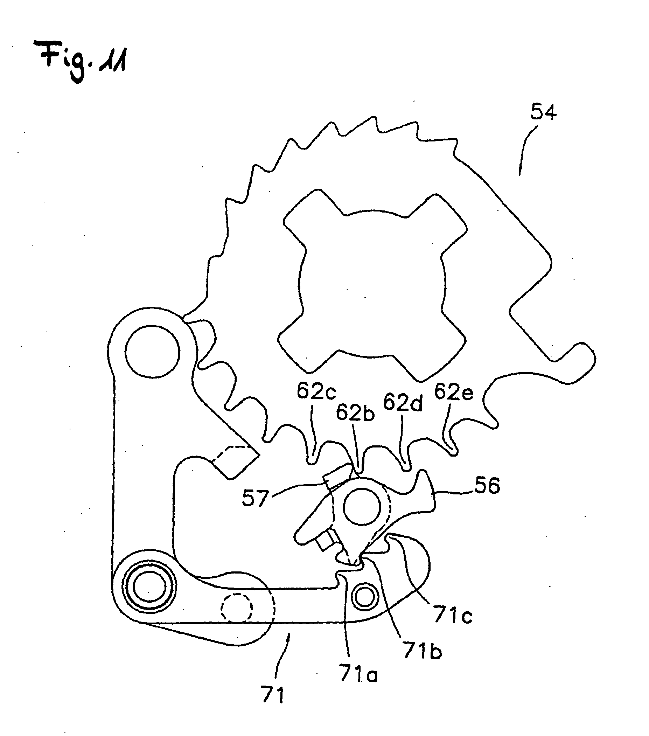

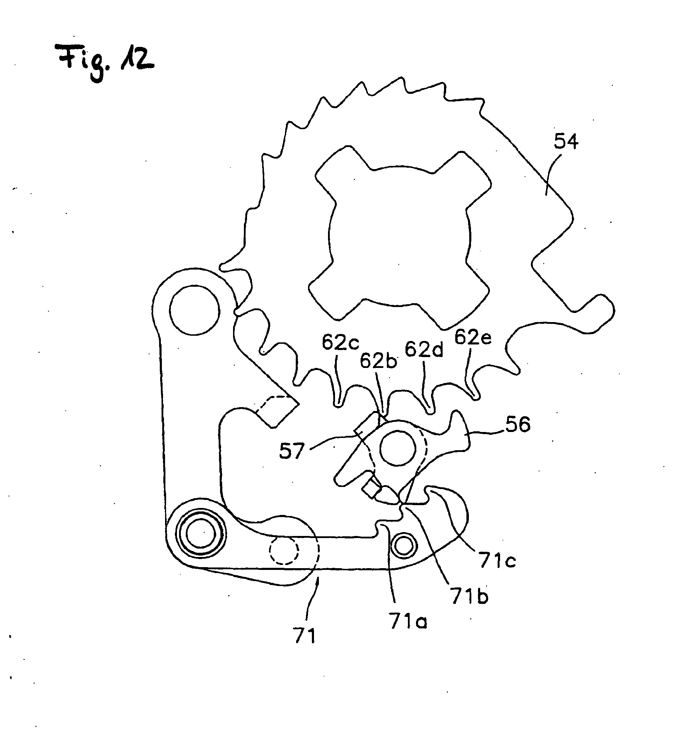

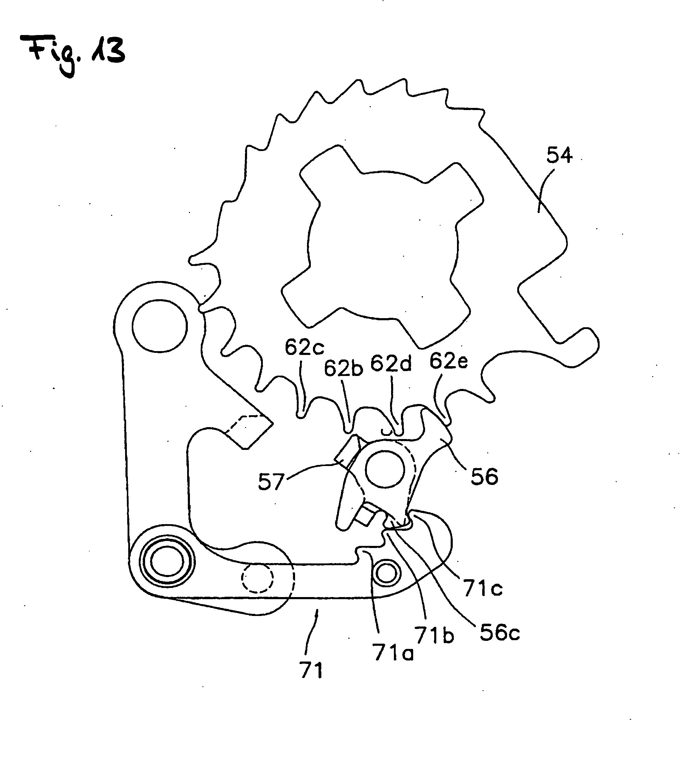

When the lever member 36 is further caused to swing in this state, as shown in Figure 11 and Figure 12, the operation portion 71b causes the positioning pawl 56 to swing to the first releasing position to rotate the positioning unit 54 in the cable releasing direction like the operation described above, and the positioning tooth 62b further presses the rotation preventing pawl 57 to cause the rotation preventing pawl 57 to swing within the predetermined range to release the engagement between the operation portion 71 b and the positioning pawl 56. Thus, as shown in Figure 13, the positioning unit 54 is further rotated in the cable releasing direction by one gear shifting stage until the positioning pawl 56 comes into contact with a positioning tooth 62e.

When the lever member 36 is further operated, the positioning unit 54 is further rotated in the cable releasing direction by one gear shifting stage with the same operation. The releasing operation can be repeated until the engagement of the engagement releasing portion 73 of the operation portion 71c is released.

When the hand is released from the lever member 36 to finish the releasing operation, the second arm member 71 urged by the spring member 74 returns to the position in Figure 4. At this time, the second arm member 71 returns to the position in Figure 4 while being in contact with the outer periphery of the regulating protrusion 56c of the positioning pawl 56, but the second arm member 71 does not act on the positioning pawl 56. The release cam portion 57c of the rotation preventing pawl 57 is formed to be hidden by the regulating protrusion 56c in this state, and thus the second arm member 71 does not act on the rotation preventing pawl 57. This prevents the cable releasing operation.

The operation in the cable winding direction is as described below.

When the winding lever 38 is operated from the operation start position toward the operation finish position, the advance pawl 59 presses the advance teeth 64 to rotate the positioning unit 54 in the cable winding direction (counterclockwise in Figure 4). Then, the positioning teeth 62 come into contact with the positioning pawl 56 to press the positioning pawl 56 toward the first releasing position. When the pressed positioning teeth 62 pass through the positioning pawl 56, however, the positioning teeth 56 return to the first engaging position. When the winding lever 38 is operated to the operation finish position, multistage winding operations, for example, of four stages can be performed.

Here, the plurality of operation portions 71a to 71c placed in a line in the second arm member 71 of the driving mechanism 39 spaced apart from the support shaft 31 engage the positioning pawl 56 to cause the positioning pawl 56 to swing to the first releasing position, the movement of the rotation preventing pawl 57 within the predetermined range releases the engagement between the second arm member 71 and the positioning pawl 56 to cause the positioning pawl 56 to swing to the first engaging position, and thus no structure for multistage releasing is placed on the support shaft 31 on which the positioning unit 54 and the winding unit 32 are placed. This prevents the increase in the axial length of the support shaft 31, and allows the multistage releasing without increasing the thickness of the gear shifting operation portion 16.

### <Other embodiments>

(a) In the above described embodiment, the operation in the cable releasing direction can be performed by any of the operations in the first direction and the second direction, but the operation in the cable releasing direction may be performed by an operation in one direction only. In this case, the first arm member may be integrated with the release lever.
(b) In the above described embodiment, the spring member 74 urges the lever member 36, the first arm member 70, and the second arm member 71, but each member may be urged by each spring member.
(c) In the above described embodiment, the gear shifting operation device of the exterior gear shifting device including the front derailleur and the rear derailleur is exemplified, but the present invention may be applied to a gear shifting operation device of an interior gear shifting device having an internal gear shifting hub.
(d) In the above described embodiment, the mounting portion 30 of the rear gear shifting operation portion 16 is separated from the rear brake lever 12, but the mounting portion may be integrally secured to the bracket of the brake lever.

### [Brief Description of the Drawings]

### [Figure 1]

Figure 1 is a side view of a bicycle to which an embodiment of the present invention is mounted.

### [Figure 2]

Figure 2 is a perspective view of a rear gear shifting operation portion according to the embodiment of the present invention.

### [Figure 3]

Figure 3 is an exploded perspective view of part thereof.

### [Figure 4]

Figure 4 is a plan view of the rear gear shifting operation portion when a positioning pawl is placed in a first engaging position.

### [Figure 5]

Figure 5 is a rear view of the rear gear shifting operation portion when a release lever is placed in a neutral position.

### [Figure 6]

Figure 6 is a rear view of the rear gear shifting operation portion when the release lever is moved in a first direction.

### [Figure 7]

Figure 7 is a rear view of the rear gear shifting operation portion when the release lever is moved in a second direction.

### [Figure 8]

Figure 8 is a partial plan view of a cable releasing operation.

### [Figure 9]

Figure 9 is a partial plan view of the cable releasing operation.

### [Figure 10]

Figure 10 is a partial plan view of the cable releasing operation.

### [Figure 11]

Figure 11 is a partial plan view of the cable releasing operation.

### [Figure 12]

Figure 12 is a partial plan view of the cable releasing operation.

### [Figure 13]

Figure 13 is a partial plan view of the cable releasing operation.

### [Description of Symbols]

- 15, 16: front and rear gear shifting operation portions
- 30: mounting portion
- 32: winding unit (an example of a cable locking portion)
- 34: position holding and releasing mechanism
- 35: release lever (an example of an operating member)
- 36: lever member (an example of an input member)
- 39: driving mechanism (an example of a driving member)
- 54: positioning unit
- 56: positioning pawl
- 57: rotation preventing pawl
- 57c: release cam portion
- 58: spring member (an example of a second urging member)
- 62, 62b, 62c, 62d, and 62e: positioning teeth
- 70: first arm member (an example of a first member)
- 71: second arm member (an example of a second member)
- 71a to 71 c: operation portions
- 72: engaging portion
- 73: engagement releasing portion
- 74: spring member (an example of a first urging member)

## Claims

1. A bicycle gear shifting operation device, comprising:
a mounting portion (30) mountable to a bicycle,
a shaft member (31) connected to said mounting portion (30) and extending in a first axial direction (X1),
a cable locking unit (32) rotatably mounted around said first axis (X1) movably in a cable pulling direction and a cable releasing direction,
a position holding and releasing mechanism (34) that includes a positioning unit (54) integrally rotatable with said cable locking unit (32) and having a plurality of positioning teeth (62), a positioning pawl (56) that swings between a first engaging position for engagement with said positioning teeth (62) and a first releasing position for release from said positioning teeth (62), and a rotation preventing pawl (57) that is movable relative to said positioning pawl (56) within a predetermined range, and placed in a second releasing position for separation from said positioning teeth (62) when said positioning pawl (56) is placed in said first engaging position, and in a second engaging position for engagement with said positioning teeth (62) when said positioning pawl (56) is placed in said first releasing position, and selectively holds said cable locking unit (32) in any one of a plurality of holding positions, and
an operating member (35) that includes an input member (36) mounted to said mounting portion (30) movably at least in a first direction, and a driving member (39) having a plurality of operation portions (71 a, 71 b, 71c) **characterized in that** the plurality of operation portions (71a, 71b, 71c) are placed in a line so as to be movably mounted to said mounting portion (30) in positions spaced apart from said shaft member (31) and engage said positioning pawl (56) by one movement of said input member (36) at least in the first direction to move said positioning pawl (56) from said first engaging position to said first releasing position, and release the engagement with said positioning pawl (56) by a movement of said rotation preventing pawl (57) within said predetermined range so that said positioning pawl (56) is movable to said first engaging position.

2. The bicycle gear shifting operation device according to claim 1, wherein each of said plurality of operation portions includes an engaging portion that engages said positioning pawl, and an engagement releasing portion that releases the engagement with said positioning pawl at said engaging portion by the movement of said rotation preventing pawl within said predetermined range.

3. The bicycle gear shifting operation device according to claim 1 or 2, wherein said rotation preventing pawl is rotated relative to said positioning pawl within said predetermined range by said positioning teeth when said rotation preventing pawl is placed in said second engaging position.

4. The bicycle gear shifting operation device according to claim 3, wherein said rotation preventing pawl includes a release cam portion that comes into contact with said engagement releasing portion of said operation portion during the rotation within said predetermined range to move said driving member to a position spaced apart from the positioning pawl.

5. The bicycle gear shifting operation device according to any one of claims 1 to 4, wherein said rotation preventing pawl and said positioning pawl are mounted to said mounting portion swingably around a second axis parallel to said first axis.

6. The bicycle gear shifting operation device according to any one of claims 1 to 5, wherein said driving member includes
a first member that is mounted, at a base thereof, to said mounting portion swingably around a third axis parallel to said first axis, and swings by the movement of said input member at least in the first direction, and
a second member that has said operation portion at a tip thereof, and is mounted to a tip of said first member swingably around a fourth axis parallel to said first axis.

7. The bicycle gear shifting operation device according to any one of claims 1 to 6, further comprising a first urging member that urges said driving member in a direction of said operation portion engaging said positioning teeth.

8. The bicycle gear shifting operation device according to any one of claims 1 to 7, further comprising a second urging member that urges said positioning pawl toward said first engaging position.

## Patentansprüche

1. Fahrradgangschaltbetätigungseinrichtung, umfassend:
einen Montageabschnitt (30), welcher an ein Fahrrad montierbar ist,
ein Schaftelement (31), welches mit dem Montageabschnitt (30) verbunden ist und sich in einer ersten axialen Richtung (X1) erstreckt,
eine Kabelverriegelungseinheit (32), welche um die erste Achse (X1) rotierbar montiert ist, bewegbar in einer Kabelziehrichtung und einer Kabellösrichtung,
einen Positionshalte- und -lösmechanismus (34), welcher eine Positioniereinheit (54) umfasst, welche mit der Kabelverriegelungseinheit (32) integral rotierbar ist und eine Vielzahl von Positionierzähnen (62), eine Positionierklinke (56), welche zwischen einer ersten Eingriffsposition zum Eingriff mit den Positionierzähnen (62) und einer ersten Lösposition zum Lösen von den Positionierzähnen (62) schwenkt, und eine Rotationsverhinderungsklinke (57) umfasst, welche innerhalb eines vorbestimmten Bereichs bezüglich der Positionierklinke (56) bewegbar ist, und in einer zweiten Lösposition platziert ist, zum Separieren von den Positionierzähnen (62), wenn die Positionierklinke (56) in der ersten Eingriffsposition platziert ist, und in einer zweiten Eingriffsposition zum Eingriff mit den Positionierzähnen (62), wenn die Positionierklinke (56) in der ersten Lösposition platziert ist und selektiv die Kabelverriegelungseinheit (32) in irgendeiner der Vielzahl an Haltepositionen hält, und
ein Betätigungselement (35), welches ein Eingabeelement (36), montiert an dem Montageanschnitt (30), bewegbar zumindest in einer ersten Richtung, und ein Antriebselement (39), aufweisend eine Vielzahl von Betätigungsabschnitten (71a, 71b, 71c), umfasst, **dadurch gekennzeichnet, dass** die Vielzahl von Betätigungsabschnitten (71a, 71b, 71c) in einer Linie platziert sind, um bewegbar an dem Montageabschnitt (30) in Positionen montiert zu sein, welche von dem Schaftelement (31) beabstandet sind, und in die Positionierklinke (56) eingreifen mittels einer Bewegung des Eingabeelements (36) zumindest in der ersten Richtung, um die Positionierklinke (56) von der ersten Eingriffsposition zu der ersten Lösposition zu bewegen, und den Eingriff mit der Positionierklinke (56) lösen mittels einer Bewegung der Rotationsverhinderungsklinke (57) innerhalb des vorbestimmten Bereichs, sodass die Positionierklinke (56) zu der ersten Eingriffsposition bewegbar ist.

2. Fahrradgangschaltbetätigungseinrichtung gemäß Anspruch 1, wobei jeder der Vielzahl an Betätigungsabschnitten einen Eingriffsabschnitt umfasst, welcher in die Positionierklinke eingreift, und einen Eingriffslösabschnitt, welcher den Eingriff mit der Positionierklinke an dem Eingriffsabschnitt löst mittels der Bewegung der Rotationsverhinderungsklinke innerhalb des vorbestimmten Bereichs.

3. Fahrradgangschaltbetätigungseinrichtung gemäß Anspruch 1 oder 2, wobei die Rotationsverhinderungsklinke bezüglich der Positionierklinke innerhalb des vorbestimmten Bereichs rotiert ist mittels der Positionierzähne, wenn die Rotationsverhinderungsklinke in der zweiten Eingriffsposition platziert ist.

4. Fahrradgangschaltbetätigungseinrichtung gemäß Anspruch 3, wobei die Rotationsverhinderungsklinke einen Lösnockenabschnitt umfasst, welcher in Kontakt mit dem Eingriffslösabschnitt des Betätigungsabschnitts während der Rotation innerhalb des vorbestimmten Bereichs kommt, um das Antriebselement zu einer Position zu bewegen, welche von der Positionierklinke beabstandet ist.

5. Fahrradgangschaltbetätigungseinrichtung gemäß einem der Ansprüche 1 bis 4, wobei die Rotationsverhinderungsklinke und die Positionierklinke an dem Montageabschnitt schwenkbar um eine zweite Achse montiert sind, welche parallel zu der ersten Achse ist.

6. Fahrradgangschaltbetätigungseinrichtung gemäß einem der Ansprüche 1 bis 5, wobei das Antriebselement umfasst
ein erstes Element, welches, an einer Basis davon, an dem Montageabschnitt schwenkbar um eine dritte Achse montiert ist, welche parallel zu der ersten Achse ist, und mittels der Bewegung des Eingabeelements zumindest in der ersten Richtung schwenkt, und
ein zweites Element, welches den Betätigungsabschnitt an einer Spitze davon umfasst, und an einer Spitze des ersten Elements schwenkbar um eine vierte Achse montiert ist, welche parallel zu der ersten Achse ist.

7. Fahrradgangschaltbetätigungseinrichtung gemäß einem der Ansprüche 1 bis 6, des Weitern umfassend ein erstes Drängelement, welches das Antriebselement in eine Richtung des Betätigungsabschnitts drängt, eingreifend die Positionierzähne.

8. Fahrradgangschaltbetätigungseinrichtung gemäß einem der Ansprüche 1 bis 7, des Weiteren unfassend ein zweites Drängelement, welches die Positionierklinke zu der ersten Eingriffsposition drängt.

## Revendications

1. Dispositif d'actionnement de changement de vitesse de bicyclette comprenant:
- une partie de montage (30) qui peut être montée sur une bicyclette,
- un élément d'arbre (31), relié à la partie de montage (30) et s'étendant dans une première direction axiale (X1),
- une unité de blocage de câble (32), montée de façon à pouvoir tourner autour du premier axe (X1), mobile dans une direction de tirage de câble et dans une direction de relâchement de câble,
- un mécanisme de maintien et de relâchement de position (34), qui comprend une unité de positionnement (54) qui peut être tournée intégralement avec l'unité de blocage de câble (32) et qui a une pluralité de dents de positionnement (62), un cliquet de positionnement (56), qui oscille entre une première position d'engagement pour un engagement avec les dents de positionnement (62) et une première position de relâchement pour un relâchement des dents de positionnement (62), et un cliquet de prévention de rotation (57) qui peut être déplacé par rapport au cliquet de positionnement (56) à l'intérieur d'une gamme prédéterminée et qui est placé dans une deuxième position de relâchement pour une séparation desdites dents de positionnement (62) lorsque le cliquet de positionnement (56) est placé dans la première position d'engagement, et une deuxième position d'engagement pour un engagement avec les dents de positionnement (62), lorsque le cliquet de positionnement (56) est placé dans la première position de relâchement, et qui maintient sélectivement l'unité de blocage de câble (32) dans n'importe laquelle d'une pluralité de position de maintien, et
- un organe d'actionnement (35) qui comprend un organe d'entrée (36) monté sur la partie de montage (30), avec possibilité de déplacement au moins dans une première direction et un organe actionneur (39) ayant une pluralité de parties d'actionnement (71 a, 71 b, 71 c),
**caractérisé en ce que** la pluralité de parties d'actionnement (71a, 71b, 71c) est placée dans une ligne, de manière à être montée avec possibilité de déplacement à la partie de montage (30), dans des positions espacées de l'élément d'arbre (31), et pour engager le cliquet de positionnement (56) par un mouvement de l'organe d'entrée (36) au moins dans la première direction pour déplacer le cliquet de positionnement (56) depuis la première position d'engagement vers la première position de relâchement, et pour relâcher l'engagement avec le cliquet de positionnement (56) par un mouvement du cliquet de prévention de rotation (57) à l'intérieur de ladite gamme prédéterminée, de sorte que le cliquet de positionnement (56) peut être déplacé dans la première position d'engagement.

2. Dispositif d'actionnement de changement de vitesse de bicyclette selon la revendication 1, dans lequel chacune de la pluralité de parties d'actionnement comprend une partie d'engagement, qui est en engagement avec le cliquet de positionnement, et une partie de relâchement d'engagement, qui libère l'engagement avec le cliquet de positionnement, au niveau de la partie d'engagement, par le mouvement du cliquet de prévention de rotation à l'intérieur de la gamme prédéterminée.

3. Dispositif d'actionnement de changement de vitesse de bicyclette selon la revendication 1 ou 2, dans lequel le cliquet de prévention de rotation est tourné par rapport au cliquet de positionnement à l'intérieur de la gamme prédéterminée par les dents de positionnement, lorsque le cliquet de prévention de rotation est placé dans la deuxième position d'engagement.

4. Dispositif d'actionnement de changement de vitesse de bicyclette selon la revendication 3, dans lequel le cliquet de prévention de rotation comprend une partie de came de relâchement, qui vient en contact avec la partie de relâchement d'engagement de la partie d'actionnement pendant la rotation à l'intérieur de la gamme prédéterminée pour déplacer l'organe d'actionnement vers une position séparée du cliquet de positionnement.

5. Dispositif d'actionnement de changement de vitesse de bicyclette selon l'une quelconque des revendications 1 à 4, dans lequel le cliquet de prévention de rotation et le cliquet de positionnement sont montés sur la partie de montage, de manière à pouvoir osciller autour d'un deuxième axe parallèle au premier axe.

6. Dispositif d'actionnement de changement de vitesse de bicyclette selon l'une quelconque des revendications 1 à 5, dans lequel l'organe d'actionnement comprend un premier élément qui est monté, à une base de l'élément, à la partie de montage, de manière à pouvoir osciller autour d'un troisième axe parallèle au premier axe, et qui oscille par le mouvement de l'organe d'entrée au moins dans la première direction, et un deuxième élément, qui est muni d'une partie d'actionnement au niveau d'une extrémité, et qui est montée à une extrémité du premier élément, de manière à pouvoir osciller autour d'un quatrième axe parallèle au premier axe.

7. Dispositif d'actionnement de changement de vitesse de bicyclette selon l'une quelconque des revendications 1 à 6, comprenant en outre un premier élément de sollicitation qui sollicite l'organe actionneur dans une direction de la partie d'actionnement en engagement avec les dents de positionnement.

8. Dispositif d'actionnement de changement de vitesse de bicyclette selon l'une quelconque des revendications 1 à 7, comprenant en outre un deuxième élément de sollicitation, qui sollicite le cliquet de positionnement vers la première position d'engagement.
